(19) Europäisches Patentamt
European Patent Office
Office européen des brevets

(11) Publication number: **0 050 411**
**B1**

(12) # EUROPEAN PATENT SPECIFICATION

(45) Date of publication of patent specification: **13.03.85**

(51) Int. Cl.$^4$: **C 08 F 14/06**

(21) Application number: **81304180.3**

(22) Date of filing: **11.09.81**

(54) **Process for the production of vinyl chloride polymers having improved optical properties.**

(30) Priority: **14.10.80 US 196948**

(43) Date of publication of application:
**28.04.82 Bulletin 82/17**

(45) Publication of the grant of the patent:
**13.03.85 Bulletin 85/11**

(84) Designated Contracting States:
**DE FR GB**

(56) References cited:
**none**

(73) Proprietor: **TENNECO POLYMERS, INC.**
**1010 Milam St.**
**Houston Texas 77002 (US)**

(72) Inventor: **Ceprini, Mario Q.**
**513 Ocean Point Avenue**
**Cedarhurst New York (US)**
Inventor: **Koral, Marvin**
**39 Round Top Road**
**Warren New Jersey (US)**
Inventor: **Hoch, Samuel**
**1529-56th Street**
**Brooklyn New York (US)**
Inventor: **Goodman, Donald**
**Klinesville Road**
**Flemington, New Jersey (US)**

(74) Representative: **Oliver, Roy Edward et al**
**POLLAK MERCER & TENCH High Holborn House**
**52-54 High Holborn**
**London WC1V 6RY (GB)**

**EP 0 050 411 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for the production of vinyl chloride polymers and to the vinyl chloride polymers produced by this process. More particularly, it relates to an improved process for the polymerization or copolymerization of vinyl chloride in aqueous systems in the presence of an emulsifying agent that is a water-soluble salt of an acid ester that is a 2,2,4-trimethylpentane-1,3-diol monoisobutyrate ester of a polycarboxylic acid having 2 to 4 carboxyl groups and 4 to 20 carbon atoms.

Emulsions and dispersions of vinyl chloride polymers are widely used as coatings for textiles, paper, flooring, wall coverings, metals, and other substrates. In addition, films prepared from them are used by themselves as finished articles, e.g., gloves and packaging materials. Because in these applications the vinyl chloride polymer compositions are used not only to protect the substrates but also to decorate them or to enhance their appearance, the coatings and films containing these compositions must have a good appearance, that is, they must be clear and they must have high gloss.

Vinyl chloride polymers are commonly prepared by emulsion, suspension, and dispersion polymerization techniques in which vinyl chloride or a mixture of vinyl chloride and a comonomer is polymerized in an aqueous system in the presence of a polymerization initiator and an emulsifying agent. The properties of the resulting emulsions and dispersions of the vinyl chloride polymers and of the polymers themselves are dependent to a large extent upon the nature of the emulsifying agent that is used in the polymerization and the amount of the emulsifying agent that is used. For example, when the emulsifying agent is an ammonium or alkali metal salt of certain organic acids, the vinyl chloride polymers obtained have combinations of physical properties that make them particularly suitable for use in the production of emulsions and dispersions that are useful as coatings and as film-forming compositions.

Enk et al. disclosed in U.S. Pat. No. 2,981,722 a dispersion polymerization process in which vinyl chloride was polymerized in an aqueous system in the presence of a polymerization initiator, such as lauroyl peroxide, and an emulsifying agent that was an ammonium or alkali metal salt of fatty acids, such as lauric acid or palmitic acid; modified fatty acids, such as epoxystearic acid, dihydroxystearic acid or hydroxyacetoxystearic acid; or dialkylsulfosuccinic acids. Other processes in which the emulsifying agent was an ammonium salt of a carboxylic acid and/or a sulfonic acid were disclosed by Noorduyn et al. in U.S. Pat. No. 3,068,184; by Benetta et al. in U.S. Pat. No. 3,332,918; by Mathieu in U.S. Pat. No. 3,895,000; and by Sidi in U.S. Pat. No. 4,169,928.

While coatings and films formed from vinyl chloride polymers prepared by these processes are characterized by excellent resistance to water, alkali, acids, alcohols, oils, and aliphatic hydrocarbons, by outstanding weathering and aging properties, and by other desirable properties, they often have unsatisfactory optical properties. The haze and lack of glass that is characteristic of many of these coatings and films can be attributed to the incompatibility of the surfactants used in the polymerization with other components of the vinyl chloride polymer compositions and/or to the presence of inorganic salts, which are commonly found in commercial surfactants.

It has now been found that water-soluble salts of acid esters that are 2,2,4-trimethylpentane-1,3-diol monoisobutyrate esters of polycarboxylic acids are excellent emulsifying agents for the polymerization of vinyl chloride that have none of the disadvantages of the previously-used emulsifying agents. The use of these acid ester salts as the emulsifying agent in the production of vinyl chloride polymers improves the optical properties of coatings and films that contain these polymers without adversely affecting their thermal stability, resistance to water, acids, alkali, and organic chemicals, and other desirable properties.

The emulsifying agents that are used in the process of this invention are water-soluble salts of acid esters of 2,2,4-trimethylpentane-1,3-diol monoisobutyrate and polycarboxylic acids that have a free carboxyl group. These emulsifying agents have the structural formula

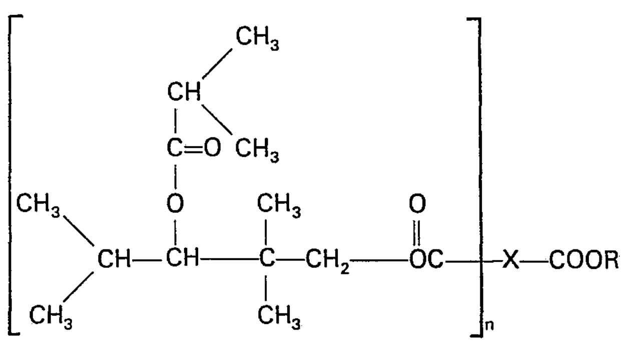

wherein X represents the residue of a polycarboxylic acid having 2 to 4 carboxyl groups and 4 to 20 carbon atoms, n is a number in the range of 1 to 3, and R represents an ammonium group, an amine group, or an alkali metal. The preferred emulsifying agents are those in which X represents the residue

of a dicarboxylic acid, n is 1, and R represents an ammonium group. Optimum results have been obtained when the emulsifying agent was the ammonium salt of mono(2,2,4-trimethylpentane-1,3-diol monoisobutyrate) phthalate.

The acid esters whose water-soluble salts are used as emulsifying agents in the process of this invention may be prepared by any suitable and convenient procedure. For example, they can be prepared by the direct esterification of 2,2,4-trimethylpentane-1,3-diol monoisobutyrate with a polycarboxylic acid or anhydride in a ratio that will yield an ester having a free carboxyl group. The esterification may be carried out in the absence of a solvent or in the presence of an organic solvent, such as toluene. If desired, an esterification catalyst, such as stannous oxide, p-toluenesulfonic acid, or tetrabutyl titanate, can be used. The acid esters prepared in this way may contain minor amounts of unreacted alcohol, unreacted polycarboxylic acid or anhydride, and/or esters in which all of the carboxyl groups have been esterified.

Examples of the polycarboxylic acids that can be used in the preparation of the acid esters include succinic acid, glutaric acid, adipic acid, azelaic acid, sebacic acid, dodecenylsuccinic acid, brassilic acid, maleic acid, fumaric acid, citraconic acid, itaconic acid, glutaconic acid, tricarballylic acid, phthalic acids, trimellitic acid, trimesic acid, pyromellitic acid, and the anhydrides of these acids.

Water-soluble salts of the acid esters are readily prepared by mixing substantially equivalent amounts of an acid ester and a basic compound with sufficient water to produce an aqueous solution of a water-soluble salt of the acid ester. An excess of the basic compound may be used to bring the aqueous solution to a pH in the range of 7.5 to 10, preferably 8 to 9. Among the basic compounds that can be used to form the water-soluble salts are sodium hydroxide, potassium hydroxide, ammonium hydroxide, triethylamine, diethanolamine, triethanolamine, dimethylaminoethanol, N-methyldiethanolamine, diisopropanolamine, ethylene diamine, 2-amino-2-methylpropanol, hexamethylenetetramine, pyridine, morpholine. It is generally preferred that the emulsifying agent be an aqueous solution that contains from 20% to 60% by weight of a water-soluble salt of the acid ester, with particularly good results being obtained when the emulsifying agent is an aqueous solution containing from 35% to 50% by weight of a water-soluble salt of an acid ester, as hereinbefore defined.

The amount of the emulsifying agent that is used in the preparation of the vinyl chloride polymers is that which is sufficient to maintain a stable emulsion during the polymerization reaction. While the amount used is dependent to some extent upon the choice of emulsifying agent, polymerization initiator, and reaction condition, it is usually in the range of from 1% to 5% by weight, preferably 1.5% to 3% by weight, based on the weight of the monomer component in the reaction mixture.

The acid ester salts can be used as the emulsifying agent in conventional emulsion, dispersion, or suspension procedures for the production of vinyl chloride polymers. In the emulsion polymerization processes, vinyl chloride polymers are prepared using such water-soluble initiators as hydrogen peroxide, organic peroxides, potassium persulfate, and redox systems at a temperature in the range of 40°C to 80°C. In the suspension and dispersion procedures, the polymerization initiator, which is monomer-soluble, may be an organic peroxide, an alkyl peroxydicarbonate, an alkyl peroxypivalate, an azo compound such as azobisisobutyronitrile, or a mixture thereof.

The process of this invention may be used in the production of vinyl chloride homopolymers as well as polymers formed by the copolymerization of vinyl chloride with a water-insoluble ethylenically-unsaturated monomer that is copolymerizable therewith. Suitable comonomers include vinyl acetate, vinyl propionate, vinyl stearate, vinyl benzoate, ethylene, propylene, methyl methacrylate, ethyl acrylate, allyl acrylate, acrylamide, acrylonitrile, methacrylonitrile, vinylidene chloride, vinyl ethers, dialkyl fumarates and maleates. When one or more of the aforementioned comonomers are used, the monomer component contains at least 70% by weight of the vinyl chloride. It is preferred that the monomer component be vinyl chloride or that it contain 80% to 90% by weight of vinyl chloride and 10% to 20% by weight of vinyl acetate.

The invention is further illustrated by the following examples. In these examples, all parts are parts by weight.

Example 1

A series of polymerizations was carried out at 53.3°C for 24 hours using a polymerization mixture that contained 103 parts of demineralized water, 100 parts of vinyl chloride, 2.62 parts of triallyl cyanurate as a 2% aqueous solution, 0.10 part of lauroyl peroxide, 0.05 part of di-2-ethylhexyl peroxydicarbonate, and various amounts of a 40% aqueous solution of an emulsifying agent that was either a water-soluble salt of a mono(2,2,4-trimethylpentane-1,3-diol monoisobutyrate) ester of a polycarboxylic acid or a comparative emulsifying agent. At the end of the polymerizations, the polymers were isolated and dried in a forced-air oven at 40°C.

The emulsifying agents and the amounts of each that were used are shown in Table I.

Example 2

Each of the vinyl chloride polymers whose preparation is disclosed in Example 1 was used in the preparation of resinous compositions. These compositions were prepared by milling the following materials together at 138°C for 5 minutes:

| | Parts |
|---|---|
| PVC Dispersion resin (product of Example 1) | 100 |
| Dioctyl phthalate | 25 |
| Butyl benzyl phthalate | 15 |
| 2,2,4-Trimethylpentane-1,3-diol diisobutyrate | 10 |
| Epoxidized soybean oil | 4 |
| Liquid calcium/zinc stabilizer (Tenneco V-1420) | 4 |

The compositions were pressed at 178°C for 3 minutes to form $1,9 \times 10^{-3}$ m (75 mil) plaques. The clarity of the plaques was determined using a Gardner Pivotable-sphere Haze Meter, HG 1204 and a Gardner Digital Photometric Unit, PG-5500. The results obtained are summarized in Table II.

TABLE I

| Ex. No. | Emulsifying agent | Amount of emulsifying agent used (parts per 100 parts of vinyl chloride) |
|---|---|---|
| 1A | Ammonium salt of mono(2,2,4-trimethylpentane-1,3-diol monoisobutyrate) phthalate | 3.0 |
| 1B | " | 1.8 |
| 1C | Sodium salt of mono(2,2,4-trimethylpentane-1,3-diol monoisobutyrate) phthalate | 3.0 |
| 1D | Ammonium salt of mono(2,2,4-trimethylpentane-1,3-diol monoisobutyrate) maleate | 3.0 |
| 1E | " | 1.8 |
| 1F | Sodium salt of mono(2,2,4-trimethylpentane-1,3-diol monoisobutyrate) maleate | 3.0 |
| 1G | Ammonium salt of mono(2,2,4-trimethylpentane-1,3-diol monoisobutyrate) dodecenylsuccinate | 3.0 |
| 1H | Ammonium salt of mono(2,2,4-trimethylpentane-1,3-diol monoisobutyrate) adipate | 3.0 |
| 1I | Ammonium salt of mono(2,2,4-trimethylpentane-1,3-diol monoisobutyrate) itaconate | 3.0 |
| Comp. Ex. A | Ammonium dihydroxystearate | 3.0 |
| B | Ammonium laurate | 3.0 |

TABLE II
Clarity of PVC resin compositions

| Ex. No. | PVC Dispersion resin used in preparation of the resin composition | % Haze |
|---|---|---|
| 2A | Product of Ex. 1A | 8.2 |
| 2B | Product of Ex. 1B | 2.8 |
| 2C | Product of Ex. 1C | 8.1 |
| 2D | Product of Ex. 1D | 10.8 |
| 2E | Product of Ex. 1E | 8.4 |
| 2F | Product of Ex. 1F | 9.6 |
| 2G | Product of Ex. 1G | 11.6 |
| 2H | Product of Ex. 1H | 7.0 |
| 2I | Product of Ex. 1I | 11.0 |
| 2J | Product of Comp. Ex. A | 18.6 |
| 2K | Product of Comp. Ex. B | 15.1 |

From the data in Table II, it will be seen that the clarity of the PVC resin compositions was improved when the polymers used in their preparation were prepared using as emulsifying agent a water-soluble salt of a mono(2,2,4-trimethylpentane-1,3-diol monoisobutyrate) ester of a polycarboxylic acid. Films of the products of Examples No. 2A—2I also had higher gloss than those of Examples 2J and 2K, which contained polymers prepared with other emulsifying agents.

Example 3

A series of polymerizations was carried out at 40°C for 16 hours using a polymerization mixture that contained 170 parts of demineralized water, 50 parts of vinyl chloride, 0.8 part of potassium persulfate, and various amounts of a 40% aqueous solution of an emulsifying agent that was an ammonium salt of a mono(2,2,4-trimethylpentane-1,3-diol monoisobutyrate) ester of a polycarboxylic acid or a comparative emulsifying agent that was an ammonium salt of a monoalkyl ester of a polycarboxylic acid. At the end of the polymerizations, the polymers were isolated and dried in a forced-air oven at 40°C.

The emulsifying agents that were used and the minimum amount of each that formed good emulsions and gave satisfactory results in the polymerizations are shown in Table III.

TABLE III

| Ex. No. | Emulsifying agent | Minimum concentration of emulsifying agent that gave good emulsions (parts per 100 parts of vinyl chloride) |
|---|---|---|
| 3A | Ammonium salt of mono(2,2,4-trimethylpentane-1,3-diol monoisobutyrate) phthalate | 1.5 |
| 3B | Ammonium salt of mono(2,2,4-trimethylpentane-1,3-diol monoisobutyrate) succinate | 1.5 |
| 3C | Ammonium salt of mono(2,2,4-trimethylpentane-1,3-diol monoisobutyrate) maleate | 1.5 |
| 3D | Ammonium salt of mono(2,2,4-trimethylpentane-1,3-diol monoisobutyrate) adipate | 3.0 |
| 3E | Ammonium salt of mono(2,2,4-trimethylpentane-1,3-diol monoisobutyrate) dodecenylsuccinate | 3.0 |
| 3F | Ammonium salt of di(2,2,4-trimethylpentane-1,3-diol monoisobutyrate) trimellitate | 3.0 |
| Comp. Ex. | | |
| C | Ammonium salt of mono(tridecyl) phthalate | 4.5 |
| D | Ammonium salt of mono(tridecyl) succinate | 3.0 |
| E | Ammonium salt of mono(tridecyl) maleate | 4.5 |
| F | Ammonium salt of mono(2-ethylhexyl) adipate | 4.5 |
| G | Ammonium salt of mono(tridecyl) dodecenylsuccinate | 3.0 |
| H | Ammonium salt of mono ($C_{12-16}$alkyl) dodecenylsuccinate | 4.5 |
| I | Ammonium salt of di(2-ethylhexyl) trimellitate | 4.5 |

The data in Table III show that smaller concentrations of the emulsifying agents were generally required to give good results in the polymerizations when the emulsifying agents were ammonium salts of mono(2,2,4-trimethylpentane-1,3-diol monoisobutyrate) esters of polycarboxylic acids than when they were ammonium salts of monoalkyl esters of the same acids.

**Claims**

1. A process of polymerization of a monomer component selected from vinyl chloride and mixtures of vinyl chloride with at least one ethylenically-unsaturated monomer copolymerizable

therewith, such mixtures containing at least 70% by weight of vinyl chloride, in an aqueous medium at a temperature in the range from 40° to 80°C in the presence of a free radical generating polymerization initiator and an emulsifying agent, characterized in that the polymerization is carried out in the presence of from 1% to 5% by weight, based on the weight of the monomer component, of an emulsifying agent comprising a water-soluble salt of a 2,2,4-trimethylpentane-1,3-diol monoisobutyrate acid ester of a polycarboxylic acid having 2 to 4 carboxyl groups and 4 to 20 carbon atoms.

2. A process according to claim 1, wherein from 1.5% to 3% by weight, based on the weight of the monomer component, of the emulsifying agent is used.

3. A process according to claim 1 or 2, wherein the emulsifying agent is an ammonium, alkali metal or amine salt of the acid ester.

4. A process according to claim 1 or 2, wherein the emulsifying agent is a water-soluble salt of a mono(2,2,4-trimethylpentane-1,3-diol monoisobutyrate) ester of a dicarboxylic acid.

5. A vinyl chloride polymer composition having improved optical properties, characterized by comprising the product of a process according to any of claims 1 to 4 and a plasticizer.

**Patentansprüche**

1. Verfahren zur Polymerisation einer Monomerkomponente, ausgewählt aus Vinylchlorid und Mischungen von Vinylchlorid mit wenigstens einem ethylenisch ungesättigten, damit copolymerisierbaren Monomer, wobei die Mischung wenigstens 70 Gew.% Vinylchlorid enthält, in einem wässrigen Medium bei einer Temperatur im Bereich von 40 bis 80°C in Gegenwart eines freie Radikale erzeugenden Polymerisationsinitiators und eines Emulgiermittels, dadurch gekennzeichnet, dass man die Polymerisation in Gegenwart von 1 bis 5 Gew.%, bezogen auf das Gewicht der Monomerkomponente, eines Emulgiermittels aus einem wasserlöslichen Sals eines Säureesters von 2,2,4-Trimethylpentan-1,3-diol-monoisobutyrats und einer Polycarbonsäure mit 2 bis 4 Carboxylgruppen und 4 bis 20 Kohlenstoffatomen durchführt.

2. Verfahren gemäss Anspruch 1, dadurch gekennzeichnet, dass das Emulgiermittel in einer Menge von 1,5 bis 3 Gew.%, bezogen auf das Gewicht der Monomerkomponente, verwendet wird.

3. Verfahren gemäss Ansprüchen 1 oder 2, dadurch gekennzeichnet, dass das Emulgiermittel ein Ammonium-, Alkali- oder Aminsalz des Säureesters ist.

4. Verfahren gemäss Ansprüchen 1 oder 2, dadurch gekennzeichnet, dass das Emulgiermittel ein wasserlösliches Salz eines Mono-(2,2,4-trimethylpentan-1,3-diol-monoisobutyrat)esters einer Dicarbonsäure ist.

5. Vinylchloridpolymer mit verbesserten optischen Eigenschaften, dadurch gekennzeichnet, dass es ein Produkt gemäss dem Verfahren nach einem der Ansprüche 1 bis 4 und einen Weichmacher enthält.

**Revendications**

1. Procédé de polymérisation d'un composant monomère choisi parmi le chlorure de vinyle et des mélanges de chlorure de vinyle avec au moins un monomère éthyléniquement insaturé copolymérisable avec lui, ces mélanges contenant au moins 70% en poids de chlorure de vinyle, dans un milieu aqueux à une température dans la plage de 40° à 80°C, en présence d'un déclencheur de polymérisation engendrant un radical libre et d'un agent émulsifiant, caractérisé en ce que la polymérisation est effectuée en présence de 1% à 5% en poids, sur la base du poids du composant monomère, d'un agent émulsifiant comprenant un sel soluble dans l'eau d'un ester acide de monoisobutyrate de triméthyl-2,2,4 pentane-1,3 diol d'un acide polycarboxylique comportant 2 à 4 groupes carboxyle et 4 à 20 atomes de carbone.

2. Procédé suivant la revendication 1, dans lequel on utilise 1,5% à 3% en poids, sur la base du poids du composant monomère, de l'agent émulsifiant.

3. Procédé suivant la revendication 1 ou 2, dans lequel l'agent émulsifiant est un sel d'ammonium, de métal alcalin ou d'amine, de l'ester acide.

4. Procédé suivant la revendication 1 ou 2, dans lequel l'agent émulsifiant est un sel soluble dans l'eau d'un mono(monoisobutyrate de triméthyl-2,2,4 pentane-1,3 diol) ester d'un acide carboxylique.

5. Composition de polymère de chlorure de vinyle ayant des propriétés optiques améliorées, caractérisée en ce qu'elle comprend le produit d'un procédé suivant l'une quelconque des revendications 1 à 4 et un plastifiant.